(19) Europäisches Patentamt
European Patent Office
Office européen des brevets

(11) **EP 1 252 607 B1**

(12) **EUROPEAN PATENT SPECIFICATION**

(45) Date of publication and mention
of the grant of the patent:
**15.06.2005 Bulletin 2005/24**

(51) Int Cl.⁷: **G06T 7/20**

(86) International application number:
**PCT/FI2000/001119**

(21) Application number: **00987539.4**

(22) Date of filing: **20.12.2000**

(87) International publication number:
**WO 2001/048695 (05.07.2001 Gazette 2001/27)**

(54) **OPTICAL FLOW AND IMAGE FORMING**

OPTISCHER FLUSS UND BILDAUFBAU

FLUX OPTIQUE ET FORMATION D'IMAGES

(84) Designated Contracting States:
**AT BE CH CY DE DK ES FI FR GB GR IE IT LI LU MC NL PT SE TR**

(30) Priority: **28.12.1999 FI 992799**

(43) Date of publication of application:
**30.10.2002 Bulletin 2002/44**

(73) Proprietor: **Kesäniemi, Martti**
**00700 Helsinki (FI)**

(72) Inventor: **Kesäniemi, Martti**
**00700 Helsinki (FI)**

(74) Representative: **Savela, Antti-Jussi et al**
**Patent Agency Compatent Ltd.**
**Hitsaajankatu 6**
**00810 Helsinki (FI)**

(56) References cited:
**EP-A2- 0 621 578**      **US-A- 5 241 608**
**US-A- 5 500 904**       **US-A- 6 008 865**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**Field of the Invention**

The present invention relates generally to the field of digital image processing and, more particularly, a method for forming a motion vector field composed of motion vectors between at least two images. In the method the motion vector field is formed by minimizing it in relation to at least two criteria, the first criterion representing the motion information between the images and the second criterion the smoothness of the motion vector field. Further, additional constraints are used in forming the motion vector field, said additional constraints determining motion vector-specifically limit values of the directional change permitted to the motion vector. Weight of the first criterion is adjusted motion vector-specifically to be smaller when the limit values are approached, and thus on account of the adjustment the proportion of the first criterion is suppressed and the proportion of the second criterion increases when the motion vector field is formed by minimization.

**Background of the Invention**

Digital visual imaging provides versatile possibilities for processing and compressing pictures and forming new visual images. Owing to the movements of the object, there usually are differences between two successive images. Digital visual imaging can also be used for motion recognition. The application area of visual imaging is extensive: a wide variety of computer vision applications, compression of video images, clinical section images, enhancement of resolution, etc.

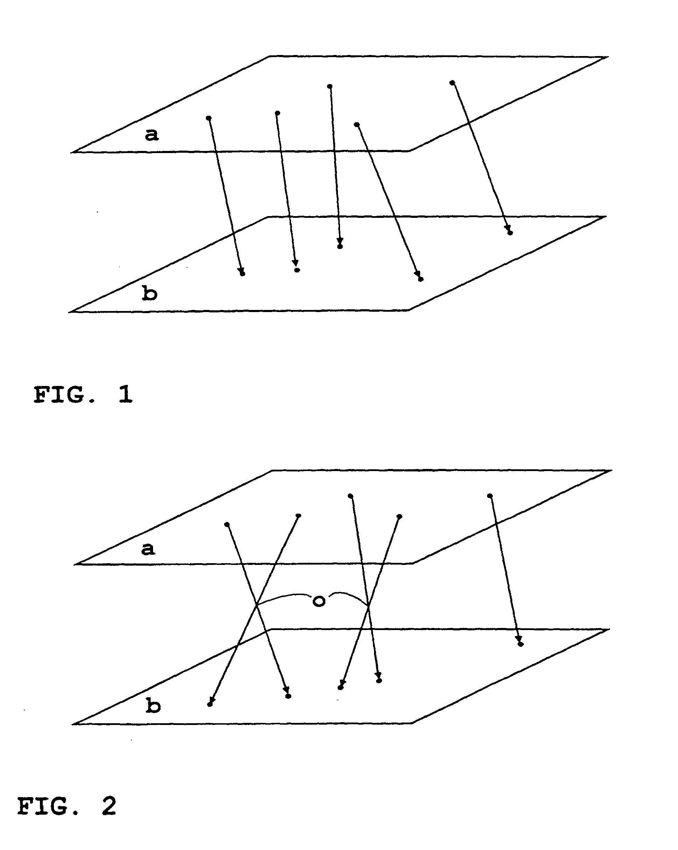

One of the most usual functions of visual imaging is the representation of motion information between two pictures (usually taken in successive moments). For example, if the first picture depicts a dog wagging its tail, in the second picture the position of the dog's tail is different. The aim is to determine the motion information included in the movement of the tail. This is done by defining the optical flow between the pictures, that is, the motion vector field that connects the corresponding points in the two images (a and b, Figure 1). When the optical flow has been defined, it can be used to form a new picture - a so-called intermediate picture - between the two originals.

There are many prior art methods for defining optical flow, for example gradient-based methods and motion estimation over a hierarchy of resolutions. Other known methods include block-based methods and methods matching objects in images (U.S. Patent 5,726,713 and U.S. Patent 4,796,087). These methods are not, however, capable of yielding a similar high-resolution flow as the gradient-based methods. The so-called feature-based methods, founded on recognizing and connecting the corresponding features between two images, are in a category by itself. Yet it is difficult to develop any general feature classification, wherefore the feasibility of feature-based methods is largely dependent on the picture material to be processed.

US patent 5241608 describes a gradient-based method according to which a motion vector field is formed between two images, connecting the images in such a way that the square sum of the differences in value (e.g. differences in luminosity) of the combined image points is minimized (minimising the mean square error taking account of motion). However, this condition is not sufficient to uniquely determine the flow generated: the smoothness of the flow, i.e. the requirement that the distance between the points in the first picture must be approximately the same in the second picture as well, is used as an additional condition.

In the method of said US patent velocity vector fields are estimated from a time-varying image sequence. Estimated vector fields my be used for converting a time-varying image sequence from a first frame rate to a second frame rate. The estimate of the vector field is determined as a compromise between two sets of criteria or constraints: the optical flow criterion, which relate to the values of the time-varying image function at the corresponding points of the successive image of the sequence, and the directional smoothness criterion, which relate the values of the neighbouring velocity vectors.

These constraints are selectively suppressed in the neighbourhoods of the occlusion boundaries by attaching a weight to each constraint. Hence, the use of weights can be deemed as an additional constraint. The step of estimating vector fields includes forming a matrix of image irradiance function values for each image, forming a multilevel resolution pyramid for each image by correlating on each level the matrix of said function values with a matrix of weights obtained by sampling a measurement function corresponding to that level.

Although the method described in the US patent 5241608 utilizes weights, the weights obtained by sampling the measurement function fail to guarantee a smooth vector field at so-called occlusion points, where the object present in a picture moves to be located on top of another object in the picture (Figure 2, reference o).

The objective of the present invention is to accomplish such an additional constraint comprising weights, which produces an entirely smooth vector field.

# EP 1 252 607 B1

## Summary of the Invention

The objective of the invention is achieved so that the weighting of the motion information is proportional to the smallest distance of the motion vector from the limit values of the directional change permitted to the motion vector, according to which the absolute value of the difference between the directional change of two adjacent motion vectors shall be smaller than the distance between fixing points of the same motion vectors, wherein said fixing points define the location points through which the individual motion vectors shall pass and said directional change corresponds to a deviation from the direction orthogonal to the image plane, said directional change being expressed as a shift vector having the direction of the image plane.

The idea of the invention is to produce a flow that uniquely determines the points in the intermediate images corresponding to the points on the surfaces of the original images, in other words, each point in an intermediate image has one corresponding point in both of the original pictures. The flow is determined in such a way that all of the new pictures to be formed in between the original pictures can be formed by means of the same optical flow. Each motion vector of the flow has a permitted area of movement defined by the motion vectors surrounding said motion vector, within the bounds of which its direction can change when the flow is formed. Hence, the area of movement is applied as an additional constraint in the present invention, adherence to which ensures the uniqueness of the flow. Since the image information often includes areas (such as occlusion points) infringing the additional constraint, ensuring the uniqueness of these areas will warrant the uniqueness of the entire flow. An unique flow can be realized by adjusting the proportion of the mean square error taking account of movement and of the smoothness criterion when the flow is formed, in such a way that in the vicinity of violation of the additional constraints, the proportion of mean square error taking account of movement is suppressed. This should preferably be done in such a way that the proportion of mean square error is zeroed when the additional constraints are violated.

Since in the present method an unlimited number of new images can be formed by means of one flow, the method enables, among other things, a more efficient way than heretofore of compressing an image set. The invention enables the use of a rapidly convergent and computationally light algorithm for determining the flow, which makes it advantageous to utilize the invention also in applications to which the production of new images does not directly relate. Furthermore, the invention enables, for instance, enlargement of an original image, so that the enlarged image is more agreeable to the human eye than an image enlarged by the prior art methods.

## List of Drawings

In the following, the invention will be described in detail with reference to the examples of Figures 1-15, set forth in the accompanying drawings in which

Fig. 1 shows an example of an optical flow between two images,
Fig. 2 shows an example of occlusion points of an optical flow,
Fig. 3 illustrates the determining of an individual motion vector of the flow in accordance with the invention and the shift of the motion vector,
Fig. 4 depicts an example of the search of a motion vector passing through an image point in a new image in accordance with the invention,
Fig. 5 illustrates in flow chart form the search of the value of an image point in a new image,
Fig. 6 illustrates the change in the weighting factor of the mean square error portion in the permitted area of movement of the motion vector,
Fig. 7 illustrates the permitted area of an individual motion vector on the image plane when the constraining factor is a single neighbouring motion vector,
Fig. 8 illustrates the permitted area of an individual motion vector on the image plane when the constraining factor is constituted by four neighbouring motion vectors,
Fig. 9 illustrates the permitted areas of an individual motion vector on both image planes,
Fig. 10 depicts in flow chart form an example of forming an optical flow in accordance with the invention,
Fig. 11 depicts in flow chart form an example of forming a new image on a new image plane,
Fig. 12 shows by way of example enlarging of an aliased image in by prior art methods and by the method of the invention,
Fig. 13 shows an example of motion vectors to be formed between two pixel lines/columns,
Fig. 14a depicts in flow chart form an example of forming a new enlarged image in accordance with the invention,
Fig. 14b represents a continuation of Fig. 14a,
Fig. 15 illustrates image enlargement in accordance with the invention when the pixel lines and columns are processed simultaneously.

**Detailed Description of the Invention**

In the following, the mathematical background of the invention will be described. Many of the formulae to be set forth are previously known, wherefore also other equations corresponding to them will be found in the literature in the field - for example for calculating the cost function and iteration. Yet mathematical consideration is necessary for understanding and describing the invention. The vectors are denoted with bold lettering in the present study. In this context, the use of two images to determine an optical flow and a new image are studied, but it is also possible to use a larger number of images, in which case the noise portions appearing in the images can be eliminated.

Determining an optical flow (Figure 1) between two images can be represented as an optimization task of two variables, wherein the interrelation of the variables of the function to be minimized must be selected. (There may also be a larger quantity of variables depending on the application.) As stated previously, the square sum of the value differences of the image points and the smoothness of the flow are normally employed as variables in the gradient-based methods. The aim is thus to minimize the difference between the values (for example luminosity values) of the image points, i.e. pixels, connected by the flow on the one hand, and the smoothness of the flow, i.e. the requirement that points adjacent in the first image are mapped adjacent to one another in the second image as well, on the other hand.

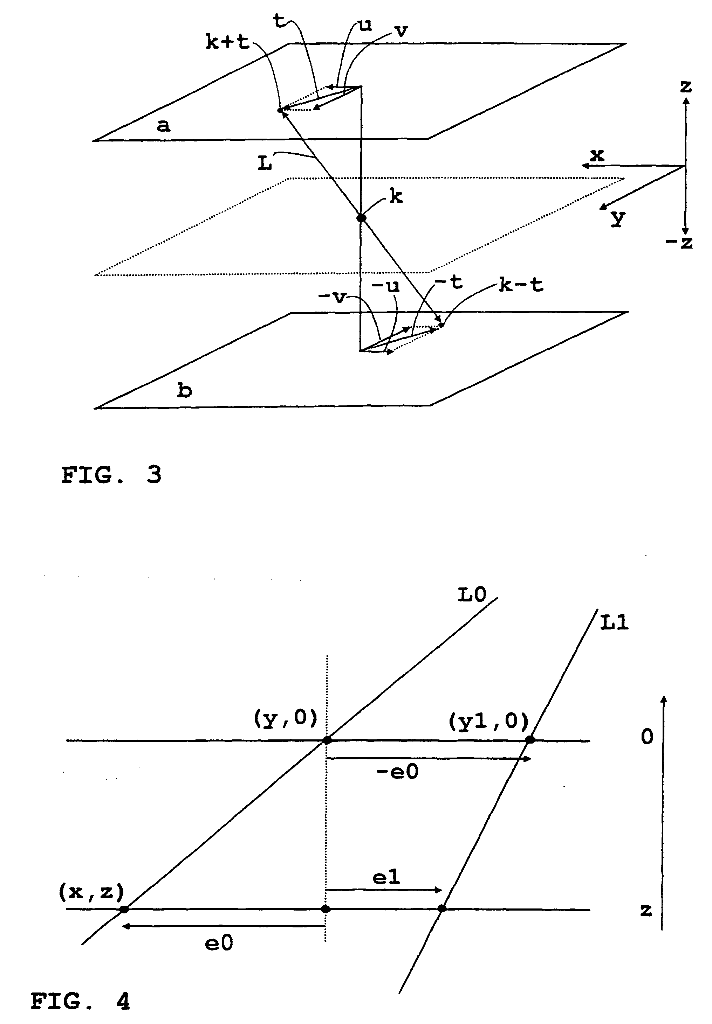

Let a vector field composed of individual motion vectors **L** (Figure 3) be formed between the images. The vector field is fixed between the images in such a way that the fulcrum **k** of each vector is midway between images a and b. The motion vector fixed at point **k** = $(x, y)$ intersects the image surfaces at points $\mathbf{k} + \mathbf{t} = (x+\boldsymbol{u},\ y+\boldsymbol{v})$ and $\mathbf{k}\text{-}\mathbf{t} = (x\text{-}\boldsymbol{u},\ y\text{-}\boldsymbol{v})$, where **t** is the shift of the motion vector from the position orthogonal to the surface of the images.

Let us consider the vector field as continuous, in which case the equation to be minimized will be

$$J = \iint f(u(x, y), v(x, y), u_x, u_y, v_x, v_y)\ dx\ dy, \tag{1-1}$$

where the functional within the integral equation will be

$$f = \alpha\ (\ g_1\ (x+u(x, y), y+v(x, y)) - g_2(x-u(x, y), y-v(x, y)))^2$$

$$+(\frac{du(x,y)}{dx})^2 + (\frac{du(x,y)}{dy})^2 + (\frac{dv(x,y)}{dx})^2 + (\frac{dv(x,y)}{dy})^2\ ;$$

$$= \alpha\ (\ g_1\ (x+u, y+v) - g_2\ (x-u, y-v))^2 + u_x^2 + u_y^2 + v_x^2 + v_y^2, \tag{1-2}$$

where $g_1$ is the value of the pixel of the first image, $g_2$ is the value of the pixel of the second image and $\boldsymbol{u_x}, \boldsymbol{u_y}, \boldsymbol{v_x}, \boldsymbol{v_y}$ are partial derivatives in relation to the lower index.

The functional to be minimized is composed of the smoothness criterion, i.e. the sum of the partial derivatives of the flow, $\boldsymbol{u_x}^2 + \boldsymbol{u_y}^2 + \boldsymbol{v_x}^2 + \boldsymbol{v_y}^2$, on the one hand, and of the mean square error criterion taking account of motion, $(\ g_1\ (x+\boldsymbol{u}, y+\boldsymbol{v}) - g_2\ (x-\boldsymbol{u}, y-\boldsymbol{v}))^2$, on the other hand. The interrelation of the criteria is determined by the parameter $\alpha$.

The minimum of the functional $J$ can be sought by using the calculus of variations, by setting the variations of $J$ relative to $\boldsymbol{u}$ and $\boldsymbol{v}$ as zero. With this constraint, the following equations are satisfied:

$$\frac{\partial f}{\partial u} - \frac{d}{dx}\frac{\partial f}{\partial u_x} - \frac{d}{dy}\frac{\partial f}{\partial u_y} = 0 \tag{1-3a}$$

$$\frac{\partial f}{\partial v} - \frac{d}{dx}\frac{\partial f}{\partial v_x} - \frac{d}{dy}\frac{\partial f}{\partial v_y} = 0 \tag{1-3b}$$

The first terms in equations (1-3a) and (1-3b) can be written into the following form:

$$\frac{\partial f}{\partial u} = 2\alpha\ (\ g_1\ (x+u, y+v) - g_2(x-u, y-v))$$

$$(\frac{\partial g_1(x+u,y+v)}{\partial x} + \frac{\partial g_2(x-u,y-v)}{\partial x}) \tag{1-4a}$$

$$\frac{\partial f}{\partial v} = 2\alpha \; ( \; g_1 \; (x+u, \; y+v) - g_2 \; (x-u, \; y-v))$$

$$\frac{\partial g_1(x+u, \; y+v)}{\partial y} + \frac{\partial g_2(x-u, \; y-v)}{\partial y} . \tag{1-4b}$$

The latter terms in equations (1-3) can be expressed as:

$$\frac{d}{dx}\frac{\partial f}{\partial u_x} = 2 \; u_{xx} \; ; \; \frac{d}{dy}\frac{\partial f}{\partial u_y} = 2 \; u_{yy} \; ; \tag{1-5a}$$

$$\frac{d}{dx}\frac{\partial f}{\partial v_x} = 2 \; v_{xx} \; ; \; \frac{d}{dy}\frac{\partial f}{\partial v_y} = 2 \; v_{yy}. \tag{1-5b}$$

By substituting (1-4) and (1-5) in equations (1-3), we obtain:

$$\alpha \; ( \; g_1 \; (x+u, \; y+v) - g_2(x-u, \; y-v)) \; (\frac{dg_1}{dx} \; (x+u, \; y+v) + \frac{dg_2}{dx} \; (x-u, \; y-v))$$

$$-\nabla^2 u = 0 \; , \tag{1-6a}$$

$$\alpha \; ( \; g_1 \; (x+u, \; y+v) - g_2 \; (x-u, \; y-v)) \; (\frac{dg_1}{dy} \; (x+u, \; y+v) + \frac{dg_2}{dy} \; (x-u, \; y-v))$$

$$- \nabla^2 v = 0 \; , \tag{1-6b}$$

where the Laplace function of the flow $\nabla^2 \boldsymbol{u} = \boldsymbol{u}_{xx} + \boldsymbol{u}_{yy}$ and $\nabla^2 \boldsymbol{v} = \boldsymbol{v}_{xx} + \boldsymbol{v}_{yy}$.
Depending on what mathematical method of calculation is used, the Laplace function can be approximated for example with terms $\nabla^2 \boldsymbol{u} \approx \bar{\boldsymbol{u}} - \boldsymbol{u},$ and $\nabla^2 \boldsymbol{v} \approx \bar{\boldsymbol{v}} - \boldsymbol{v}$ , wherein

$$\bar{u}(x,y) = 1/4(u(x,y-1) + u(x-1,y) + u(x+1,y) + u(x,y+1) \tag{1-7}$$

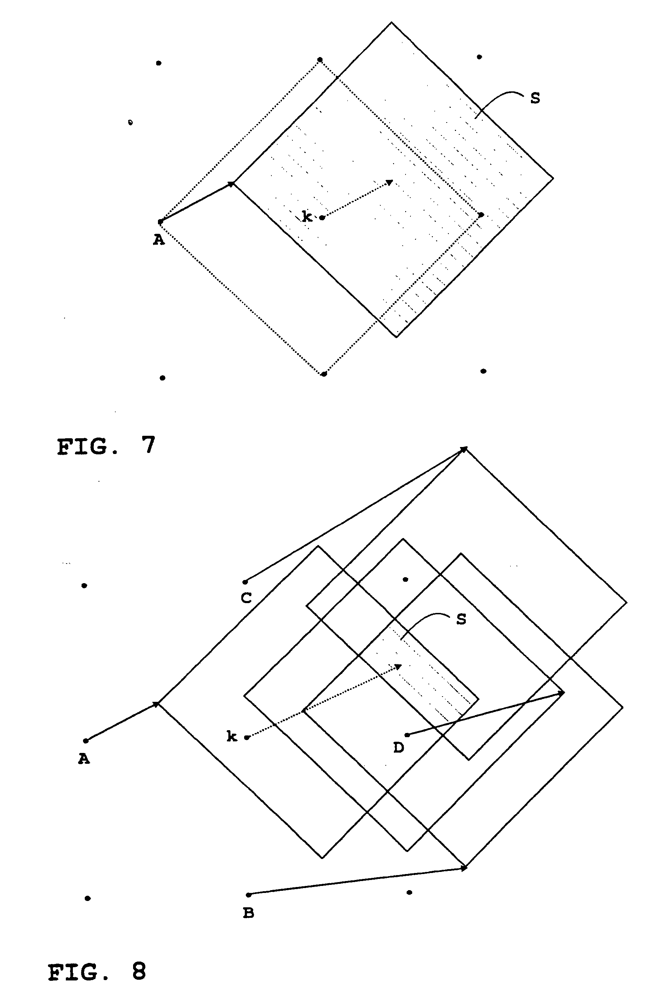

where $\boldsymbol{u}(x+i, \; y+i)$ are the calculation points surrounding point $(x, \; y)$. The same also holds true for $\bar{\boldsymbol{v}}$. The number of calculation points in this study is 4, but it may also be e.g. 8. In Figure 7, the four adjacent points surrounding point k being considered, said adjacent points being used for the calculation, are connected by a broken line. If eight surrounding calculation points were used in the calculation, each point surrounding point k which is being considered would influence the value of $\bar{\boldsymbol{u}}$ and $\bar{\boldsymbol{v}}$ .
The flow can thus be determined by minimizing equations (1-6) by means of the following iterative process:

$$u_{n+1} = u_n + \gamma \; [(\bar{u} - u_n) - \alpha( \; g_1(x+u_n, \; y+v_n) - g_2(x-u_n, \; y-v_n))$$

$$(\frac{dg_1}{dx} \; (x+u_n, \; y+v_n) + \frac{dg_2}{dx} \; (x-u_n, \; y-v_n))] \tag{1-8a}$$

$$v_{n+1} = v_n + \gamma \; [(\bar{v} - v_n) - \alpha( \; g_1 \; (x+u_n, \; y+v_n) - g_2 \; (x-u_n, \; y-v_n))$$

$$(\frac{dg_1}{dy} \; (x+u_n, \; y+v_n) + \frac{dg_2}{dy} \; (x-u_n, \; y-v_n))], \tag{1-8b}$$

where $\gamma$ is the relaxation parameter used in the iteration, determining the proportion of the upgrading term in the new motion vector value.

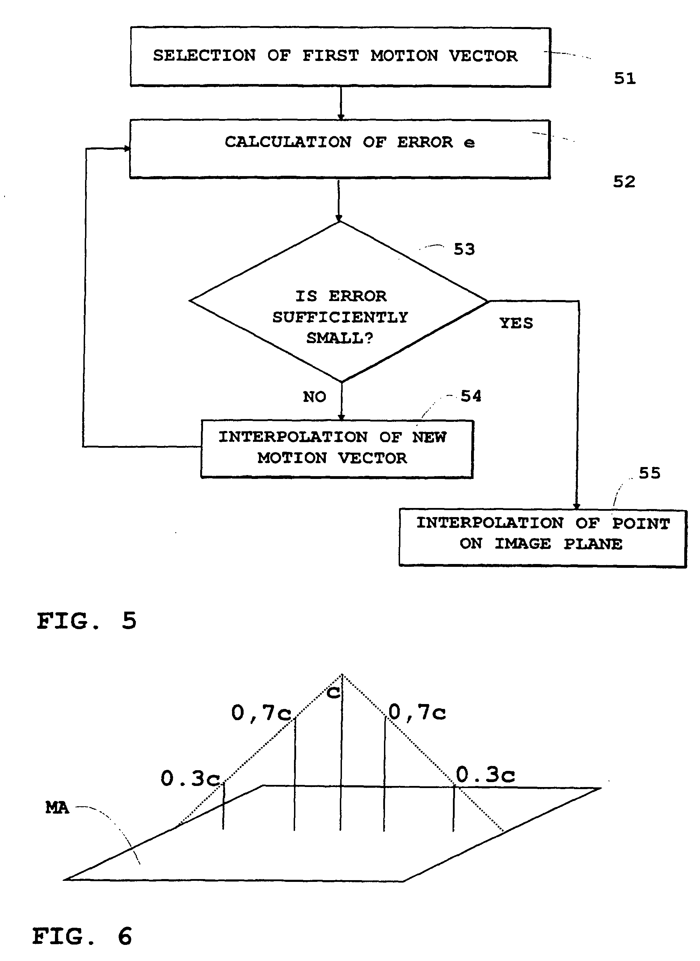

Once the flow has been determined in accordance with equations 1-8, the values, i.e. colours (or the gray scale, for example) of the image points in the images between the known images can be determined. The values of the image points in the image halfway between the original images are obtained on the basis of the motion vectors and the intersections of the images. When it is desired to define the value of a point between the original images that is not situated midway between the images, the motion vector passing through this image point must first be determined, whereafter the value of the desired point is interpolated from the points of the original images. Said vector can be sought for instance by means of the following iterative algorithm (Figures 4 and 5): selecting the motion vector L0 whose fixing point (**y**,0) is on the same line orthogonal to the images as the point to be determined (**x**, *z*) (step 51); determining the distance vector e0 between this motion vector and the point to be determined on the plane having the direction of the images (step 52); selecting as the new motion vector L1 the vector whose fixing point (**y1**,0) is at the distance indicated by the distance vector determined in the preceding step from the fixing point of the previous motion vector (*y*,0) in the reverse direction (-e0) (step 54); repeating these steps until the value of the distance vector is considered to be small enough (step 53). Finally, the value of the new point on the image plane is sought on the basis of the motion vector selected (step 55). The motion vector field can be made by interpolation to be continuous, that is, the motion vectors between the fixing points are formed by interpolating from the values of the motion vectors passing through the surrounding fixing points. Hence, motion vectors passing through the original fixing points or motion vectors interpolated between them can be used to form the new image.

By denoting the co-ordinates of the point to be determined as (*x*, *z*) and the co-ordinates of the fixing point of the motion vector passing through this point as (y, *0*), the former can be expressed as:

$$y_n = x - c[\ t(y_{n-1}) \cdot z], \tag{2-1}$$

where $\mathbf{y}_n$ is the new and $\mathbf{y}_{n-1}$ the previous candidate for the fixing point of the motion vector, and $\mathbf{t} = [\boldsymbol{u}, \boldsymbol{v}]$. The coefficient c is a changeable upgrading coefficient dependent on the earlier upgradings. Let us examine the convergence of the algorithm (2-1) (presuming that c=1): let us study on what conditions to be imposed on the vector field shift the algorithm will yield the situation:

$$y_n + t(y_n) \cdot z = x \tag{2-2}$$

that is, when the following holds true:

$$\lim_{n \to \infty} \ (\ \mathbf{y}_n + \mathbf{t}(\mathbf{y}_n) \cdot z - \mathbf{x} \ ) = 0, \tag{2-3}$$

where $-1 \leq z \leq 1$. The initial error is

$$e_0 = x - (y_0 + t(y_0) \cdot z) \tag{2-4}$$

After the first iteration

$$y_1 = x - t(y_0) \cdot z, \tag{2-5}$$

thus giving an error of

$$e_1 = x - (y_1 + t(y_1) \cdot z) = x - ((x - t(y_0) \cdot z) + t(x - t(y_0) \cdot z) \cdot z)$$

$$= t(y_0) \cdot z - t(x - t(y_0) \cdot z) \cdot z = z \cdot (t(y_0) - t(x - t(y_0) \cdot z\ )) \tag{2-6}$$

Likewise, the errors at rounds *n* and *n*+1 will be obtained as

$$e_n = x - (y_n + t(y_n) \cdot z) = x - t(y_n) \cdot z - y_n$$

$$e_{n+1} = x - (y_{n+1} + t(y_{n+1}) \cdot z) = -z \cdot (t(x - t(y_n) \cdot z) - t(y_n)) \tag{2-7}$$

The ratio of the length of the error vectors $\mathbf{e}_n$ and $\mathbf{e}_{n+1}$ obtained is

$$\frac{|e_{n+1}|}{|e_n|} = z \cdot \frac{|t(x - t(y_n) \cdot z) - t(y_n)|}{|x - t(y_n) \cdot z - y_n|} \tag{2-8}$$

By substituting $\mathbf{a} \equiv x - \mathbf{t}(y_n) \cdot z$ and $\mathbf{b} \equiv y_n$, equation (2-8) can be written into the form

$$\frac{|e_{n+1}|}{|e_n|} = z \cdot \frac{|t(a) - t(b)|}{|a - b|}. \tag{2-9}$$

Equation (2-9) reaches its minimum and maximum on the surface of the images ($z = \pm 1$). In order for the algorithm to be convergent with all values $-1 \le z \le 1$,

$$\frac{|t(a) - t(b)|}{|a - b|} < 1. \tag{2-10}$$

must hold true.

The lengths of the vectors can be expressed in a variety of ways, depending on what mathematical method of calculation is used. Preferred methods include the use of the 1-norm or infinite-norm, for example. In the 1-norm, the length of the vector is the sum of the lengths of the vector components, $|\mathbf{t}| = |\mathbf{u}| + |\mathbf{v}|$, and in the infinite-norm the length of the vector is the length of the greatest vector component, $|\mathbf{t}| = \max\{|\mathbf{u}|, |\mathbf{v}|\}$. By using the 1-norm, where $\mathbf{a} = (a_1, a_2)$ and $\mathbf{b} = (b_1, b_2)$, the left-hand side of equation (2-10) can be written into the form

$$\frac{|t(a) - t(b)|}{|a - b|} =$$

$$\frac{|u(a_1,a_2) - u(b_1,a_1)| + |v(a_1,a_2) - v(b_1,a_2)|}{|a_1 - b_1|} \frac{|a_1 - b_1|}{|a - b|}$$

$$+ \frac{|u(a_1,a_2) - u(a_1,b_2)| + |v(a_1,a_2) - v(a_1,b_2)|}{|a_2 - b_2|} \frac{|a_2 - b_2|}{|a - b|} \tag{2-11}$$

The right-hand side of equation (2-11) corresponds to the weighted sum of the difference quotients of vector field $\mathbf{t}$: thus it still holds true that

$$\frac{|\mathbf{t(a)} - \mathbf{t(b)}|}{|\mathbf{a} - \mathbf{b}|} \le r\left(\left|\frac{\partial \mathbf{u}}{\partial \mathbf{x}}\right| + \left|\frac{\partial \mathbf{v}}{\partial \mathbf{x}}\right|\right) + (1 - r)\left(\left|\frac{\partial \mathbf{u}}{\partial \mathbf{y}}\right| + \left|\frac{\partial \mathbf{v}}{\partial \mathbf{y}}\right|\right) < 1,$$

$$\tag{2-12}$$

where $0 \le r \le 1$. In order for equation (2-12) to be satisfied with all values of $r$,

$$\left|\frac{\partial \mathbf{u}}{\partial \mathbf{x}}\right| + \left|\frac{\partial \mathbf{v}}{\partial \mathbf{x}}\right| < 1 \tag{2-13a}$$

$$\left|\frac{\partial \boldsymbol{u}}{\partial \boldsymbol{y}}\right| + \left|\frac{\partial \boldsymbol{v}}{\partial \boldsymbol{y}}\right| < 1, \qquad\qquad (2\text{-}13b)$$

must hold true, where $\mathbf{t}(x, y) = [\boldsymbol{u}(x, y), \boldsymbol{v}(x, y)]$.

Hence, the algorithm described in equation (2-1) places additional constraints on the flow to be sought (equation 2-13), according to which the absolute value of the difference between the shifts of two neighbouring motion vectors must be less than the distance between the fixing points of the same neighbouring motion vectors. Since the additional constraints pertain to the partial derivatives of the flow, which the smoothness criterion seeks to minimize, satisfying the constraints can be guaranteed by reducing the proportion of the term representing mean square error in the upgrading. The constraints of equation (2-13) can be realized by replacing parameter $\alpha$ in equation (1-8) for example with a parameter obtained from equation 3-1:

$$a(u_x, u_y, v_x, v_y) = \alpha \cdot \max\{0,\ 1 - \max\{|u_x| + |v_x|,\ |u_y| + |v_y|\}/d\}, \qquad\qquad (3\text{-}1)$$

where d is the distance between the fixing points.

The absolute values of the partial derivatives $|u_x|$, $|u_y|$, $|v_x|$ and $|v_y|$ of equation (3-1) can be approximated for instance by means of equations:

$$|u_x(x, y)| = \max\{|u(x+1, y) - u(x, y)|,\ |u(x, y) - u(x-1, y)|\}$$

$$|v_x(x, y)| = \max\{|v(x+1, y) - v(x, y)|,\ |v(x, y) - v(x-1, y)|\}$$

$$|u_y(x, y)| = \max\{|u(x, y+1) - u(x, y)|,\ |u(x, y) - u(x, y-1)|\}$$

$$|v_y(x, y)| = \max\{|v(x, y+1) - v(x, y)|,\ |v(x, y) - v(x, y-1)|\} \qquad\qquad (3\text{-}2)$$

wherein the differences between the shift of the motion vector and the shifts of its closest neighbours are calculated. The greatest difference of shifts indicates the smallest distance of the motion vector from the boundaries of the area of movement. Hence, the maximum possible difference of the shifts equals the distance between the fixing points. There are also other ways of approximating the derivative, such as calculating the difference of the shifts of the neighbouring motion vectors to the motion vector being studied: $|\boldsymbol{v}(x, y+1) - \boldsymbol{v}(x, y-1)|$, where the shift of the actual motion vector being studied is not used to determine the derivative.

What is essential in equation (3-1) is that the values of a diminish when the partial derivatives increase, and that the proportion of the mean square error, taking account of motion, in the upgrading term vanishes when constraints (2-13) are broken (note Figure 2). In other words, when the flow is being iterated, for each motion vector its shortest distance to the limit at which the additional constraints are broken is calculated, and in accordance therewith the weighting of the term taking account of motion is upgraded. Equations (1-8) can now be written into form

$$u_{n+1} = u_n + \eta_D\,(\bar{u} - u_n) - \eta_X\,a\,(u_x, u_y, v_x, v_y)\,(\,g_1\,(x+u_n, y+v_n) - g_2$$

$$(x-u_n, y-v_n))((\frac{dg_1}{dx}\,(x+u_n, y+v_n) + \frac{dg_2}{dx}\,(x-u_n, y-v_n)) \qquad\qquad (3\text{-}3a)$$

$$v_{n+1} = v_n + \eta_D\,(\bar{v} - v_n) - \eta_X\,a\,(u_x, u_y, v_x, v_y)\,(\,g_1\,(x+u_n, y+v_n) - g_2$$

$$(x-u_n, y-v_n))((\frac{dg_1}{dy}\,(x+u_n, y+v_n) + \frac{dg_2}{dy}\,(x-u_n, y-v_n)), \qquad\qquad (3\text{-}3b)$$

where $\eta_D$ is the unit parameter of the smoothness criterion and $\eta_X$ is the unit parameter of the mean square error taking account of motion.

Figure 6 illustrates the change of parameter a within the permitted area of movement MA of the motion vector.

Let the value of parameter a be c when the motion vector meets the image plane orthogonally, in which situation the motion vector is located in the middle of the area of movement. When the shift of the motion vector increases and it approaches the boundaries of the area of movement, the value of parameter a decreases, as will be seen from the figure. The decrease can be linear, as is shown in the figure, or non-linear, depending on the application.

Let us study the additional constraints by means of Figures 7-9. Figure 7 illustrates the permitted intersecting area of the motion vector fixed to point k with the image plane when the constraining factor is the motion vector fixed to a neighbouring fixing point A. Let us denote also this motion vector A, according to the fixing point. Let us assume A to be known, and hence by shifting the motion vector fixed to point A to point k (let us call the shifted motion vector A', denoted with a broken line in the figure), the constraining influence of A on the permitted shifting area of the motion vector fixed to point k is found. The permitted shifting area S (denoted with a hatched line in the figure) is determined in such a way that the distance of the intersection of the image and the motion vector fixed to point k from the intersection of the image and motion vector A' shall be less than the distance between points A and k. When studying the figure, it is to be borne in mind that the image plane is different from the plane of the fixing point. In other words, if the plane of the fixing point is shifted along the motion vectors onto the image plane and if all motion vectors have the same direction (in this case, the direction of A), a permitted shifting area S is obtained for the motion vector being studied that passes through point **k** when the constraining factor is one known motion vector A. Since four surrounding fixing points have been used in the calculation, the permitted area has the shape of a square, at the angles of which the motion vectors passing through the neighbouring fixing points are located. The square denoted with a broken line illustrates a situation where motion vector A has no shift but the motion vector meets the image plane orthogonally. The shape of the area of movement need not necessarily be a square, but the edges of the square may be curved, or the area may even possibly be a circle. At their maximum, however, the boundaries of the area of movement must pass through the neighbouring points that are used in the calculation.

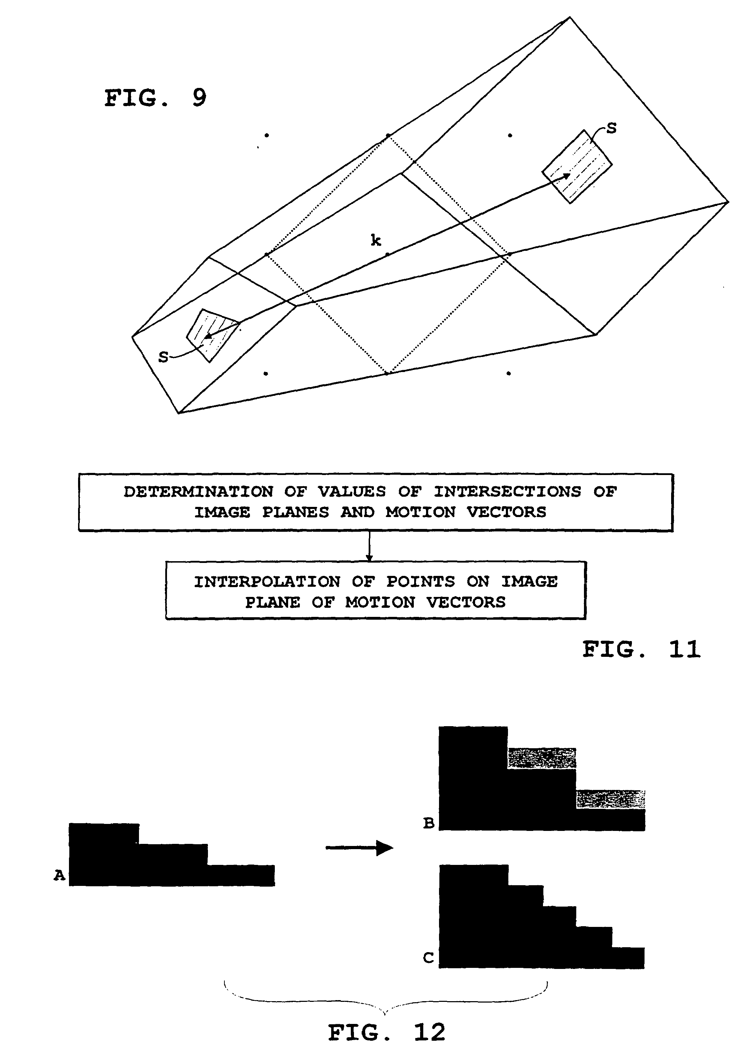

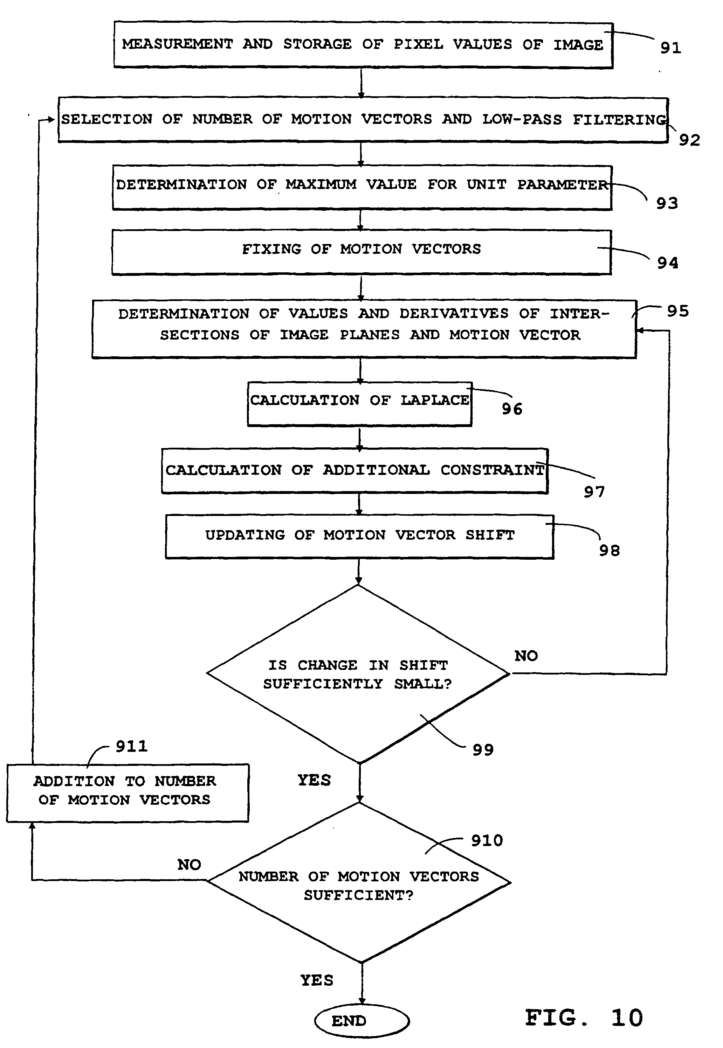

Figure 8 illustrates the influence of the motion vectors of the four closest neighbouring fixing points (A, B, C and D) on the motion vector passing through point k. The permitted area S on the image plane is denoted with a hatched line. Figure 9 illustrates the permitted areas of intersection of the motion vector on the image planes of the original images.

**First Embodiment of the Invention**

The following presents, by way of example, the implementation of the invention to a situation where the optical flow between two known images is sought (Figure 10) and new images between said images are formed by means of the flow and the original images (Figures 4 and 11).

First, the images to be processed are introduced into the flow determining system. At this stage, the size of the sampling matrix, i.e. the pixel number into which the images are digitalized, is selected. As a next step, the value of each pixel defined by the sampling matrix is measured from the images (Figure 10, step 91). The value can be for example a colour or a grayish hue. What variable is used can be selected in accordance with the situation.

Since it is preferred to select the number of points on the fixing plane (i.e. the number of motion vectors) to be smaller than the pixel number (step 92), the digitalized images are low-pass filtered for example by convolution with the Gaussian function (the filtering can be implemented in some other manner as well, or omitted completely, even though it is preferable). The Gaussian function is separable, wherefore the convolution can first be calculated in direction x and thereafter in direction y, which is more rapid than calculating a bidimensional convolution. Hence, the size of the filtering function employed is dependent on the number of motion vectors (i.e. on the distance between the motion vectors). In connection with the filtering, the derivatives and the desired pixel values are stored in memory from the surface of both images, for instance the greatest derivatives in the direction of each surface coordinate ($g'_{max}$ = max $\{g'_{1,1}, g'_{2,1}, g'_{1,2}, g'_{2,2}\}$) and the greatest and smallest pixel values between the images ($g_{min}$ = min$\{g_1, g_2,\}$, $g_{max}$ = max $\{g_1, g_2,\},$). Using these values, the greatest permitted value for unit parameter $\eta_x$ - by means of which the speed of convergence is influenced when the desired optical flow is sought - is determined (step 93).

After the image processing described above, the fixing plane and the fixing points therein up to the midpoint of the images are determined (step 94). The fixing plane may also be at another point than midway, but is most advantageous to use a plane formed in the middle. It is to be noted that if the first original image serves as the fixing plane, it suffices to calculate the derivatives from the second image only. The number of fixing points is the same as the number of motion vectors determined in connection with the filtering. The fixing of the motion vectors can also be performed at an earlier step.

Thereafter, for each motion vector located at each fixing point ($\mathbf{k}$= ($x$, $y$)):

a) The pixel values, the derivatives and the motion vector shift for the images at the intersections of the motion vector and the images are sought, $\mathbf{k}+\mathbf{t}$(x) for the first image and $\mathbf{k}-\mathbf{t}$(x) for the second image (step 95). The derivatives are obtained by calculating the difference between the values of two neighbouring image points. The initial direction of the motion vector may be directly against the image planes, but if earlier information on the direction of the motion vectors is available (for example a motion vector field calculated chronologically by means of the previous image pair), this can be made use of.

b) The Laplace function of the representation is calculated (step 96) by calculating the difference between the motion vector shift t(x) and the mean of the shifts of the surrounding motion vectors. The value of the Laplace function indicates the non-smoothness of the motion vector field, i.e., inversely it indicates the smoothness.

c) The additional constraint (equation 3-1) - i.e. the differences between the motion vector shift **t**(**x**) and the shifts of the surrounding motion vectors - is calculated, and the greatest of these is selected (step 97).

d) Thereafter, a new shift **t**(x) is upgraded for the motion vector located at point **k** = (*x, y*) (step 98) by substituting the quantities calculated above in equations (3-3), in accordance with which the direction of an individual motion vector is upgraded as the additional constraint calculated at step c) changes parameter a. The result is stored in memory if the positions of all lines are upgraded simultaneously (Jakobian iteration), or alternatively the position of the motion vectors is immediately changed (Gauss-Seidel iteration).

Thereafter, steps a)-d) are repeated 10-15 times or until the change in the representation is considered to be sufficiently small (step 99).

Once the optical flow containing the desired number of motion vectors has thus be en achieved, the number of motion vectors can be increased, i.e., the resolution of the optical flow can be enhanced (steps 910 and 911). The initial shifts of the new motion vectors to be added are obtained by interpolating between the shifts of the previous motion vectors. The process is restarted by selecting the number of motion vectors (distance from one another) and low-pass filtering. Such processing is continued until the desired vector density has been achieved, that is, an optical flow has been formed between the images.

A new image (or new images) are calculated by means of the flow and the original images using the method represented by equation (2-1) (Figures 4 and 5). Another alternative method for forming a new image/new images is to interpolate the value of an image point for each discrete motion vector of the optical flow to a desired plane *z*: in other words, the value of a motion vector point on plane *z* is obtained by interpolating from the values of the intersections of the first image and motion vector and the second image and motion vector. Thus, in this method a motion vector point value is calculated with the desired value of *z* (Figure 11).

Even though the determining of the flow and the new image has been studied in this example utilizing two original images, it is possible to utilize more than two images for determining the optical flow and the new image. In such a situation, the calculation and the method must naturally be modified from those presented above.

**Second Embodiment of the Invention**

The invention can also be made use of in enlarging aliased images. Aliased images in this context refer to images in which the sampling frequency is small compared to the frequencies contained in the images. When aliased images are enlarged, the advantage in accordance with Figure 12 is achieved compared to conventional interpolation, in other words, less shadow images will be formed.

In Figure 12, object A has been enlarged in the orthogonal direction by factor two. Object B represents the result obtained by conventional interpolating methods, and object C represents the interpolation result obtained by means of the optical flow.

When aliased images are enlarged, the new image is sought similarly as in the interpolation between two images: herein, however, the new image is sought between two adjacent lines/columns of image points - not between two images, but within the image, so to speak. The equations set forth previously will herein be rendered the following form:

$$u_{n+1} = u_n + \gamma \left( (\bar{u} - u_n) - a(u_n) \left( g_1(x+u_n) - g_2(x-u_n) \right) \right.$$

$$\left( \frac{dg_1}{dx} (x+u_n) + \frac{dg_2}{dx} (x-u_n) \right) \tag{4-1}$$

and

$$a(u_x) = \alpha_0 \cdot \max\{0, 1 - |u_x|\}\}, \tag{4-2}$$

wherein

$$|u_x| = |u_x(x)| = \max \{|u(x+1) - u(x)|, |u(x-1) - u(x)|\}/d, \qquad (4\text{-}3)$$

where d is the distance between the fixing points of the motion vectors on the fixing plane, $x$ is the fixing point of the motion vector, and $\boldsymbol{u}$ is the motion vector shift from the orthogonal position.

Also some other equation than 4-3, approximating the derivative at point $x$ being examined, can be used, an example being

$$|u_x| = |u_x(x)| = \{|u(x+1)-|u(x-1)|/d, \qquad (4\text{-}4)$$

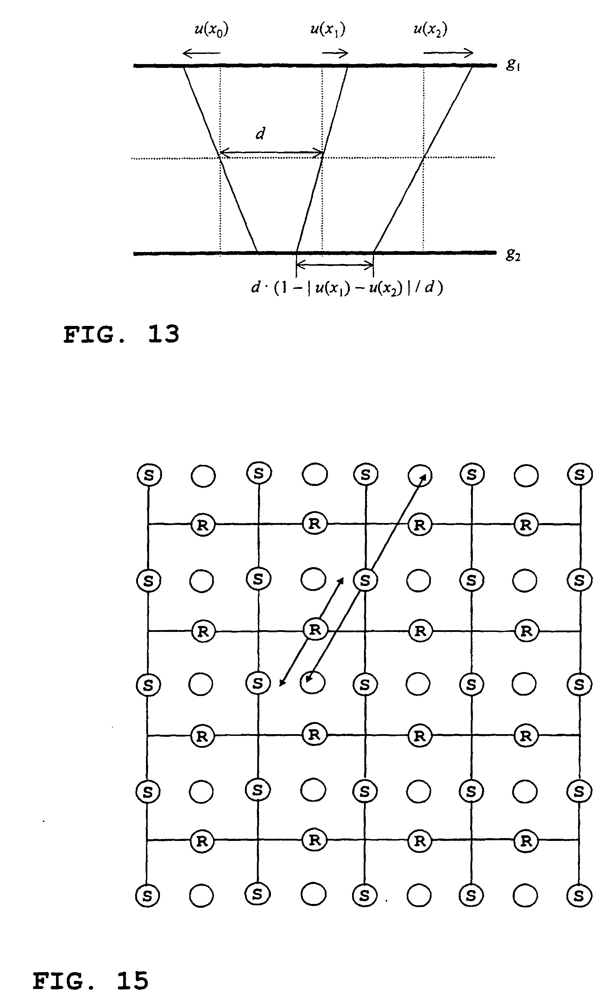

where, therefore, the approximation of the derivative is sought from the difference between the shifts of the neighbouring motion vectors and not from the difference between the shift of the motion vector of the point being examined and the shifts of the neighbouring motion vector. Figure 13 shows an example of motion vectors formed between two image point lines/columns $g_1$ and $g_2$.

Furthermore, the following algorithm can now be used for calculating new pixels:

$$y_n = x - u(y_{n-1}) \cdot z, \qquad (4\text{-}5)$$

where $z$ is the distance of the image plane to be calculated from the fixing point plane of the motion vectors.

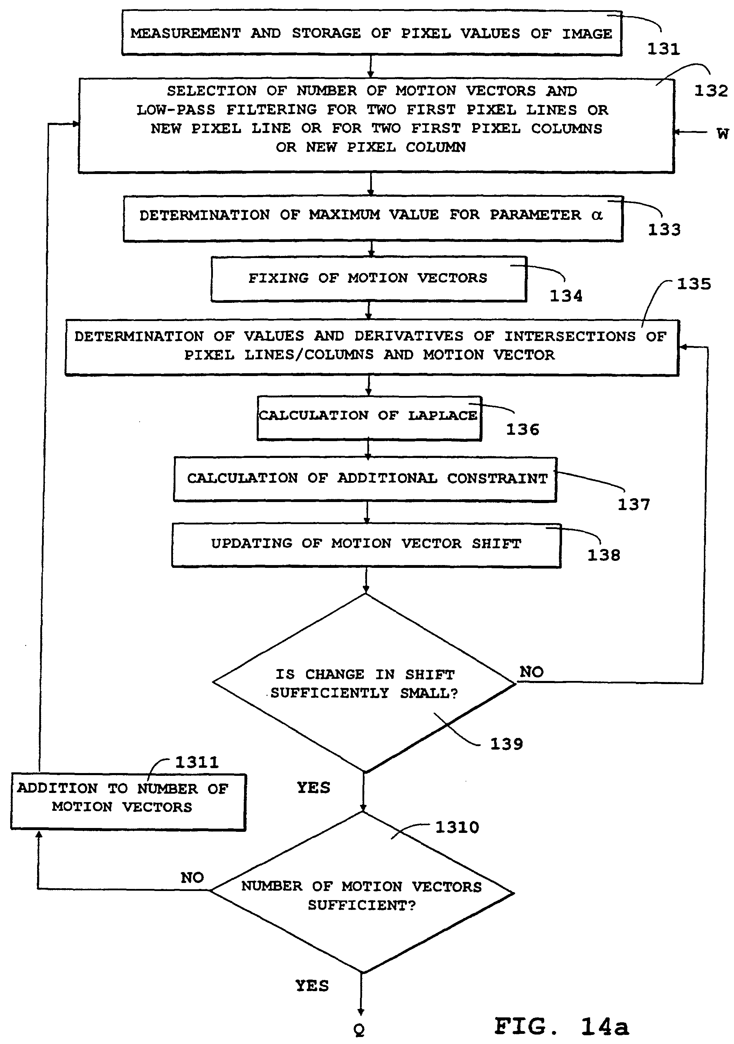

The following is an example, with reference to Figure 14a, of implementing the method to a situation where a single image is known, the optical flow of each adjacent pixel line and column in the image is sought and new pixel lines and columns are calculated by means of the flow and the original pixel lines and columns.

First, the images to be processed are introduced into the flow determining system. At this stage, the size of the sampling matrix, i.e. the pixel number into which the images are digitalized, is selected, unless the images are already rendered in digital form. As a next step, the value of each pixel is measured from the images (Figure 131). The value can be for example a colour or a grayish hue. What value is used can be selected in accordance with the situation.

The number of motion vectors is selected, and the two first pixel lines are low-pass filtered for example by convolution with the Gaussian function (step 132). In connection with the filtering, the greatest derivatives in both directions of the image plane ($g'_{max} = \max\{g'_{1,1}, g'_{2,1}, g'_{1,2}, g'_{2,2}\}$) and the greatest and smallest value differences between the images (for example gray scale values $g_{min} = \min\{g_1, g_2\}$, $g_{max} = \max\{g_1, g_2\}$) are stored in memory. The derivatives are obtained by calculating the difference between the grayish hue of two adjacent image points. Parameter $\alpha_0$ is set in such a way that the greatest possible upgrading shift of the lines will be as great as possible but will not violate the constraint, e.g. $\alpha_0 = d / (g'_{max} \cdot (g_{max} - g_{min}))$(step 133).

After the image processing described above, the fixing plane and the fixing points therein are determined up to the midway of the pixel lines (step 134). The number of fixing points is the same as the number of motion vectors determined in connection with the filtering. The fixing of the motion vectors can also be performed in an earlier step.

Each motion vector (fixed to each fixing point) is submitted to the following procedure:

a) The values of the image points, the motion vector shift and the derivatives at the intersections of the motion vector and the pixel line are sought, $x+\boldsymbol{u}(x)$ in the first line and $x-\boldsymbol{u}(x)$ in the second line (step 135).
b) The Laplace function, i.e. the smoothness of the representation is calculated for example by calculating the difference between the shift of the motion vector $\boldsymbol{u}(x)$ and the mean of the shifts of the motion vectors flanking it (step 136).
c) The additional constraint is calculated (step 137), that is, e.g. the differences between the shift of the motion vector $\boldsymbol{u}(x)$ and the shifts of the adjacent motion vectors are determined and the greatest of these is selected.
d) The quantities are substituted in equation (4-1), and thus the additional constraint changes parameter a and the motion vector shift is upgraded (step 138).

Steps a)-d) are performed for each motion vector, and they are repeated 10-15 times, or until the change in the representation is considered to be sufficiently small (step 139).

Thereafter, the number of motion vectors is increased if desired (steps 1310 and 1311) and the process is restarted with a new low-pass filtering. The initial shifts of the new lines to be added are obtained by interpolating between the shifts of the previous lines. The process described above is repeated until the desired line density has been achieved.

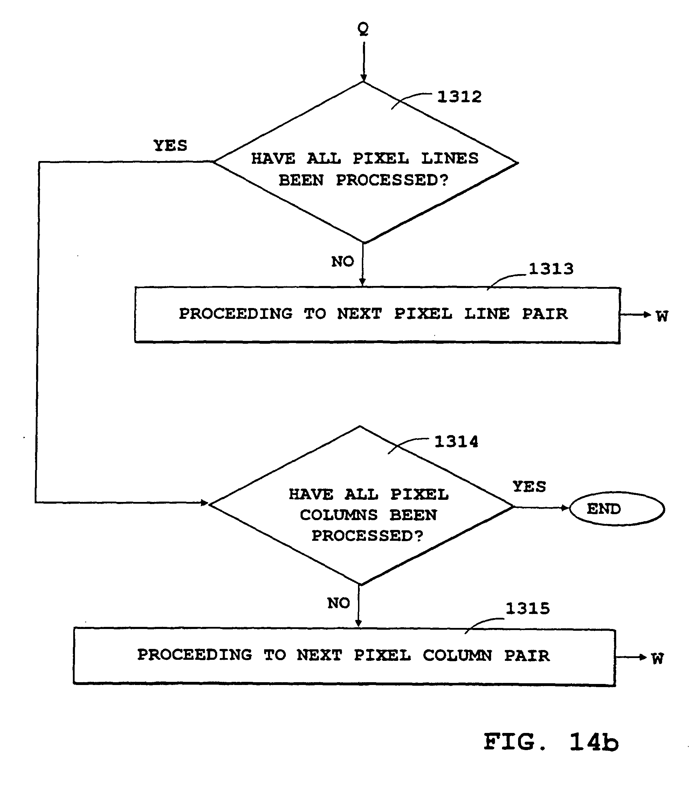

Once the flow between the two first pixel lines has been formed and stored, the next pixel line pair is proceeded to (Figure 14b, steps 1312 and 1313). The same operations are performed on the new pixel line pair as on the first line pair, except that the previous second line now becomes the first line, which is why the filtering must be repeated for the latter line only.

Each pixel line pair in the image is processed in the manner described above, whereafter the method proceeds to processing pixel columns (steps 1314 and 1315). Also the pixel column pairs in the figure are similarly processed.

The desired new pixel lines and columns are calculated by means of the flow and the original pixels by either of the methods described above (equation 4-5, Figure 4 or Figure 11).

To save memory space, the new pixel lines and columns can also be calculated immediately subsequent to the determination of the flow, and thus the storing of the flow is replaced by forming new pixel lines/columns.

The flow required to enhance the resolution can also be formed by calculating the pixel lines and columns simultaneously: A bidimensional flow matrix is formed from the motion vectors to be calculated e.g. in accordance with the attached Figure 15. The fixing points of the vectors corresponding to the lines are denoted with R and the fixing points of the vectors calculated on the basis of the columns are denoted with S. The fixing points are interconnected with elucidatory lines in the figure. The empty points are points in the original image.

In this connection, a rectangular set of pixel co-ordinates has been examined, but the pixel rows could just as well be at an angle of 45°, between which rows the new pixels are formed. In this context, it is also possible to use more than two pixel rows/columns for determining the flow and the new image.

In comparison with the prior art, the invention affords a fairly short calculation time on account of the fact that there is no need to calculate each intermediate image separately. The flow is determined in such a way that all of the new pictures to be formed in between the original pictures can be formed by means of the same optical flow. The invention also enables considerable changes between images on account of the suppression of the motion-minimizing term as the constraints are broken at the occlusion points. Moreover, the method is very robust on account of automatic adjustment (change of weighting factor).

The invention has very wide application. The motion information of the optical flow can be used for example for interpolating or extrapolating new images, improving the quality of an image sequence, and speed measurement by means of a camera. The determination of corresponding image points also has bearing upon forming three-dimensional images on the basis of stereo image pairs. Motion recognition based on images is used in several applications of computer vision. Motion information can also be used for altering images in an image set and for reducing, i.e. compressing, the information required for transmitting an image set. Since by means of this method an unlimited number of new images can be formed using one flow, image compression is more effective than in the prior art methods.

The fact that realization of the constraints is attended to enables the use of a rapidly convergent and computationally light algorithm for determining the flow, which makes it advantageous to implement the invention also in applications to which the production of new images does not directly relate.

The method can also be used for enhancing image resolution and producing high-quality still frames from video images.

Even though the invention has been described in the above mainly by means of examples of an image to be formed between two original images and enlargement of an aliased image, the invention can be implemented in other embodiments within the scope of the inventive idea; for example more than two images can be used for determining the flow and forming a new image.

## Claims

1. A method for forming a motion vector field composed of motion vectors between at least two images in connection with image processing, in which method

   the motion vector field is formed by minimizing it in relation to at least two criteria, the first criterion representing the motion information between the images and the second criterion the smoothness of the motion vector field,

   additional constraints are used in forming the motion vector field, said additional constraints determining motion vector-specifically limit values of the directional change permitted to the motion vector, and

   in forming the motion vector field the weighting of the first criterion is adjusted motion vector-specifically to be smaller when the limit values are approached, and thus on account of the adjustment the proportion of the first criterion is suppressed and the proportion of the second criterion increases when the motion vector field is formed by minimization.

   **characterized in that** the weighting of the first criterion is proportional to the smallest distance of the motion vector from the limit values, according to which the absolute value of the difference between the directional change of two adjacent motion vectors shall be smaller than the distance between fixing points of the same motion vectors, wherein said fixing points define the location points through which the individual motion vectors shall pass and said directional change corresponds to a deviation from the direction orthogonal to the image plane, said directional change being expressed as a shift vector having the direction of the image plane.

**2.** A method as claimed in claim 1, in which method:

- the number of motion vectors and their distance from one another are selected,
- the value and derivatives of each pixel are determined,
- a unit parameter is set for iterating the motion vector field,
- for each motion vector, the values and derivatives of the intersections thereof and the image planes are sought,
- the smoothness of the motion vector field is calculated,
- for each motion vector, the magnitude of the change of its shift vector having the direction of the image plane, the shift vector corresponding to the deviation of the motion vector from the direction orthogonal to the image plane, is determined,
- a motion vector field is iterated, so that the change of the shift vectors of the motion vectors is sufficiently small,
- the number of motion vectors is increased, and
- the above steps are repeated until the number of motion vectors is sufficient,

**characterized in that** the motion vectors of the motion vector field are fixed to a plane in the middle of the images, said fixing defining for each motion vector a point through which that motion vector must pass, and the limit values are sought for the shift vector of each motion vector, and said limit values are used for iterating the motion vector field.

**3.** A method as claimed in claim 1 or 2, **characterized in that** the limit value of the directional change of each motion vector is obtained by determining the differences between the shift vector of each motion vector and the shift vectors of the surrounding motion vectors, and by selecting of these the one having the greatest absolute value, wherein the directional change is expressed as a shift vector having the direction of the image plane, said shift vector simultaneously defining the motion vector point on the image plane.

**4.** A method as claimed in claim 1 or 2, **characterized in that** the limit value of the directional change of each motion vector is obtained by determining the differences between the shift vectors of the motion vectors surrounding each motion vector, and by selecting of these the one having the greatest absolute value , wherein the directional change is expressed as a shift vector having the direction of the image plane, said shift vector simultaneously defining the motion vector point on the image plane.

**5.** A method as claimed in claim 1, wherein a new image is formed from original images by means of a motion vector field, **characterized in that** the motion vector passing through a pixel of the new image to be determined is sought by

initially selecting a motion vector,

defining the distance vector between the motion vector being sought and the pixel to be determined on a plane having the direction of the images,

selecting as the new motion vector a vector whose fixing point is at the distance determined by the distance vector defined above but in the reverse direction from the fixing point of the motion vector previously selected, and

repeating the selection of a new motion vector until the value of the distance vector is considered to be sufficiently small, the motion vector last selected being the motion vector sought.

**Patentansprüche**

**1.** Verfahren zum Bilden eines Bewegungsvektorfeldes, das sich aus Bewegungsvektoren zwischen mindestens zwei Bildern zusammensetzt, in Verbindung mit Bildverarbeitung, wobei bei diesem Verfahren
das Bewegungsvektorfeld durch Minimieren desselben in Bezug auf mindestens zwei Kriterien gebildet wird, wobei das erste Kriterium die Bewegungsinformationen zwischen den Bildern und das zweite Kriterium die Glätte des Bewegungsvektorfeldes darstellt,
zusätzliche Bedingungen beim Bilden des Bewegungsvektorfeldes verwendet werden, wobei die zusätzlichen Bedingungen bewegungsvektorspezifisch Grenzwerte der dem Bewegungsvektor gestatteten Richtungsänderung bestimmen, und

beim Bilden des Bewegungsvektorfeldes die Gewichtung des ersten Kriteriums bewegungsvektorspezifisch eingestellt wird, um beim Annähern an die Grenzwerte kleiner zu sein, und somit infolge der Einstellung der Anteil des ersten Kriteriums unterdrückt wird und der Anteil des zweiten Kriteriums ansteigt, wenn das Bewegungsvektorfeld durch Minimierung gebildet wird,

**dadurch gekennzeichnet, dass** die Gewichtung des ersten Kriteriums proportional zu dem kleinsten Abstand des Bewegungsvektors von den Grenzwerten ist, wobei demzufolge der Absolutwert der Differenz zwischen der Richtungsänderung von zwei benachbarten Bewegungsvektoren kleiner sein soll als der Abstand zwischen Fixierungspunkten derselben Bewegungsvektoren,

wobei die Fixierungspunkte die Lagepunkte, durch welche die einzelnen Bewegungsvektoren verlaufen sollen, definieren, und die Richtungsänderung einer Abweichung von der Richtung orthogonal zu der Bildebene entspricht, wobei die Richtungsänderung als Verschiebungsvektor, der die Richtung der Bildebene aufweist, ausgedrückt wird.

2. Verfahren nach Anspruch 1, wobei bei diesem Verfahren

- die Anzahl von Bewegungsvektoren und deren Abstand voneinander ausgewählt werden,

- der Wert und Ableitungen jedes Bildpunkts bestimmt werden,

- ein Einheitsparameter zum Iterieren des Bewegungsvektorfeldes eingestellt wird,

- für jeden Bewegungsvektor die Werte und Ableitungen der Schnittpunkte davon und der Bildebenen gesucht werden,

- die Glätte des Bewegungsvektorfeldes berechnet wird,

- für jeden Bewegungsvektor das Ausmaß der Änderung seines Verschiebungsvektors, der die Richtung der Bildebene aufweist, bestimmt wird, wobei der Verschiebungsvektor der Abweichung des Bewegungsvektors von der Richtung, die orthogonal zur Bildebene verläuft, entspricht,

- ein Bewegungsvektorfeld iteriert wird, so dass die Änderung der Verschiebungsvektoren der Bewegungsvektoren ausreichend klein ist,

- die Anzahl von Bewegungsvektoren erhöht wird, und

- die oben genannten Schritte wiederholt werden, bis die Anzahl von Bewegungsvektoren ausreichend ist,

**dadurch gekennzeichnet, dass** die Bewegungsvektoren des Bewegungsvektorfeldes an einer Ebene in der Mitte der Bilder fixiert sind, wobei die Fixierung für jeden Bewegungsvektor einen Punkt definiert, durch welchen jener Bewegungsvektor verlaufen muss, und die Grenzwerte für den Verschiebungsvektor jedes Bewegungsvektors gesucht werden und die Grenzwerte zum Iterieren des Bewegungsvektorfeldes verwendet werden.

3. Verfahren nach Anspruch 1 oder 2, **dadurch gekennzeichnet, dass** der Grenzwert der Richtungsänderung jedes Bewegungsvektors durch Bestimmen der Differenzen zwischen dem Verschiebungsvektor jedes Bewegungsvektors und den Verschiebungsvektoren der umliegenden Bewegungsvektoren und durch Auswählen jenes aus diesen, der den höchsten Absolutwert aufweist, erhalten wird,
wobei die Richtungsänderung als Verschiebungsvektor, der die Richtung der Bildebene aufweist, ausgedrückt wird, wobei der Verschiebungsvektor zugleich den Bewegungsvektorpunkt auf der Bildebene definiert.

4. Verfahren nach Anspruch 1 oder 2, **dadurch gekennzeichnet, dass** der Grenzwert der Richtungsänderung jedes Bewegungsvektors durch Bestimmen der Differenzen zwischen den Verschiebungsvektoren der Bewegungsvektoren, die jeden Bewegungsvektor umgeben, und durch Auswählen jenes aus diesen, der den höchsten Absolutwert aufweist, erhalten wird,
wobei die Richtungsänderung als Verschiebungsvektor, der die Richtung der Bildebene aufweist, ausgedrückt wird, wobei der Verschiebungsvektor zugleich den Bewegungsvektorpunkt auf der Bildebene definiert.

5. Verfahren nach Anspruch 1, wobei mittels eines Bewegungsvektorfeldes ein neues Bild aus ursprünglichen Bildern gebildet wird, **dadurch gekennzeichnet, dass** der Bewegungsvektor, der durch einen Bildpunkt des zu bestimmenden neuen Bildes verläuft, gesucht wird durch zunächst Auswählen eines Bewegungsvektors,

Definieren des Abstandsvektors zwischen dem gesuchten Bewegungsvektor und dem zu bestimmenden Bildpunkt auf einer Ebene, welche die Richtung der Bilder aufweist,

Auswählen eines Vektors als neuen Bewegungsvektor, dessen Fixierungspunkt in dem Abstand angeordnet ist, der durch den oben definierten Abstandsvektor bestimmt wird, jedoch in der umgekehrten Richtung von dem Fixierungspunkt des zuvor ausgewählten Bewegungsvektors, und

Wiederholen der Auswahl eines neuen Bewegungsvektors, bis der Wert des Abstandsvektors als ausreichend klein betrachtet wird, wobei der letzte ausgewählte Bewegungsvektor der gesuchte Bewegungsvektor ist.

**Revendications**

1. Procédé pour former un champ de vecteurs de mouvement se composant de vecteurs de mouvement entre au moins deux images, en liaison avec un traitement d'images, procédé dans lequel

le champ de vecteurs de mouvement est formé en le minimisant par rapport à au moins deux critères, le premier critère représentant les informations de mouvement entre les images et le deuxième critère la régularité du champ de vecteurs de mouvement,

des contraintes supplémentaires sont employées dans la formation du champ de vecteurs de mouvement, lesdites contraintes supplémentaires déterminant des valeurs limites spécifiquement aux vecteurs de mouvement, de la variation en direction permise aux vecteurs de mouvement, et

dans la formation du champ de vecteurs de mouvement, la pondération du premier critère est ajustée de façon spécifique aux vecteurs de mouvement pour qu'ils soient plus petits lorsque des valeurs limites ont approchées, et ainsi à cause de l'ajustement, la proportion du premier critère est supprimée et la proportion du deuxième critère augmente lorsque le champ de vecteurs de mouvement est formée au moyen d'une minimisation,

**caractérisé en ce que** la pondération du premier critère est proportionnelle à la distance la plus petite séparant le vecteur de mouvement des valeurs limites, selon laquelle la valeur obtenue de la différence entre la variation en direction de deux vecteurs de mouvement adjacents doit être inférieure à la distance entre les points de fixation des mêmes vecteurs de mouvement,

dans lequel lesdits points de fixation définissent les points de position à travers lesquels doivent passer les vecteurs de mouvement individuels et ladite variation en direction correspond à un écart par rapport à la direction orthogonale au plan des images, ladite variation en direction étant exprimée sous forme d'un vecteur de décalage ayant la direction du plan de l'image.

2. Procédé selon la revendication 1, procédé dans lequel :

   - le nombre de vecteurs de mouvement et leur distance mutuelle sont sélectionnés,

   - la valeur et les dérivés de chaque pixel sont déterminés,

   - un paramètre unitaire est fixé pour itérer le champ de vecteurs de mouvement,

   - pour chaque vecteur de mouvement, les valeurs et les dérivés des intersections de ceux-ci et les plans d'image sont recherchés,

   - la régularité du champ de vecteurs de mouvement est calculé,

   - pour chaque vecteur de mouvement, la grandeur de la variation de son vecteur de décalage ayant la direction du plan d'image, le vecteur de décalage correspondant à l'écart du vecteur de mouvement de la direction orthogonale au plan d'image, sont déterminés,

   - un champ de vecteurs de mouvement est itéré, de sorte que la variation des vecteurs de décalage des vecteurs de mouvement soit suffisamment petite,

   - le nombre de vecteurs de mouvement est augmenté, et

   - les étapes ci-dessus sont répétées jusqu'à ce que le nombre de vecteurs de mouvement soit suffisant,

   **caractérisé en ce que** les vecteurs de mouvement du champ de vecteurs de mouvement, sont fixés à un plan au milieu des images, ladite fixation définissant pour chaque vecteur de mouvement, un point à travers lequel doit passer ce vecteur de mouvement, et les valeurs limites sont recherchées pour le vecteur de décalage de chaque vecteur de mouvement et lesdites valeurs limites sont employées pour itérer le champ de vecteurs de mouvement.

3. Procédé selon la revendication 1 ou 2, **caractérisé en ce que** la valeur limite de la variation en direction de chaque vecteur de mouvement, est obtenue en déterminant des différences entre le vecteur de décalage de chaque vecteur de mouvement et les vecteurs de décalage des vecteurs de mouvement environnants, et en choisissant parmi ces derniers, celui ayant la valeur absolue la plus grande,
dans lequel la variation en direction est exprimée sous forme d'un vecteur de décalage ayant la direction du plan d'image, ledit vecteur de décalage définissant simultanément le point de vecteur de mouvement sur le plan d'image.

4. Procédé selon la revendication 1 ou 2, **caractérisé en ce que** la valeur limite de la variation en direction de chaque vecteur de mouvement, est obtenue en déterminant des différences entre les vecteurs de décalage des vecteurs de mouvement entourant chaque vecteur de mouvement, et en choisissant parmi ces derniers, celui ayant la valeur absolue la plus grande,
dans lequel la variation en direction est exprimée sous forme d'un vecteur de décalage ayant la direction du plan d'image, ledit vecteur de décalage définissant simultanément le point de vecteur de mouvement sur le plan d'image.

5. Procédé selon la revendication 1, dans lequel une nouvelle image est formée à partir des images d'origine, au moyen d'un champ de vecteurs de mouvement, **caractérisé en ce que** le vecteur de mouvement traversant un pixel de la nouvelle image à déterminer, est recherché
en choisissant initialement un vecteur de mouvement,
en définissant le vecteur distance entre le vecteur de mouvement recherché et le pixel à déterminer sur un plan ayant la direction des images,
en choisissant en tant que nouveau vecteur de mouvement, un vecteur dont le point de fixation se trouve à la distance déterminée par le vecteur distance défini ci-dessus, mais dans la direction inverse, à partir du point de fixation du vecteur de mouvement choisi précédemment, et
en répétant le choix d'un nouveau vecteur de mouvement jusqu'à ce que la valeur du vecteur distance soit considérée comme étant suffisamment petite, le vecteur de mouvement sélectionné en dernier étant le vecteur de mouvement recherché.

FIG. 1

FIG. 2

FIG. 3

FIG. 4

```
┌──────────────────────────────────────────┐
│   SELECTION OF FIRST MOTION VECTOR        │⟍    51
└──────────────────────────────────────────┘
                    │
                    ▼
┌──────────────────────────────────────────┐
│        CALCULATION OF ERROR e             │
└──────────────────────────────────────────┘     52
                    │
                    ▼
                  ╱  ╲   53
                 ╱    ╲
                ╱      ╲
               ╱ IS ERROR╲
              ╱SUFFICIENTLY╲    YES
              ╲   SMALL?   ╱─────────────┐
               ╲         ╱               │
                ╲       ╱                │
                 ╲     ╱                 │
                  ╲   ╱                  │
                  NO │        54         │
                     ▼                   │
         ┌──────────────────────┐        │
         │ INTERPOLATION OF NEW │        │
         │    MOTION VECTOR     │        │
         └──────────────────────┘        │
                                    55   │
                     ┌──────────────────────────────┐
                     │  INTERPOLATION OF POINT       │
                     │      ON IMAGE PLANE           │
                     └──────────────────────────────┘
```

FIG. 5

FIG. 6

**FIG. 7**

**FIG. 8**

FIG. 9

k

S

S

| DETERMINATION OF VALUES OF INTERSECTIONS OF |
| IMAGE PLANES AND MOTION VECTORS |

| INTERPOLATION OF POINTS ON IMAGE |
| PLANE OF MOTION VECTORS |

FIG. 11

A

B

C

FIG. 12

```
┌────────────────────────────────────────────────────┐
│  MEASUREMENT AND STORAGE OF PIXEL VALUES OF IMAGE    │──── 91
└────────────────────────────────────────────────────┘
                          │
                          ▼
┌────────────────────────────────────────────────────┐
│ SELECTION OF NUMBER OF MOTION VECTORS AND LOW-PASS FILTERING │
└────────────────────────────────────────────────────┘──── 92
                          │
                          ▼
┌────────────────────────────────────────────────────┐
│   DETERMINATION OF MAXIMUM VALUE FOR UNIT PARAMETER  │──── 93
└────────────────────────────────────────────────────┘
                          │
                          ▼
┌────────────────────────────────────────────────────┐
│              FIXING OF MOTION VECTORS               │──── 94
└────────────────────────────────────────────────────┘
                          │
                          ▼
┌────────────────────────────────────────────────────┐──── 95
│ DETERMINATION OF VALUES AND DERIVATIVES OF INTER-   │
│  SECTIONS OF IMAGE PLANES AND MOTION VECTOR         │
└────────────────────────────────────────────────────┘
                          │
                          ▼
┌──────────────────────────┐
│   CALCULATION OF LAPLACE  │──── 96
└──────────────────────────┘
                          │
                          ▼
┌──────────────────────────────────────┐
│  CALCULATION OF ADDITIONAL CONSTRAINT │──── 97
└──────────────────────────────────────┘
                          │
                          ▼
┌──────────────────────────────────────┐
│      UPDATING OF MOTION VECTOR SHIFT  │──── 98
└──────────────────────────────────────┘
                          │
                          ▼
              ◇ IS CHANGE IN SHIFT        NO
                SUFFICIENTLY SMALL? ◇──────────►
                          │ YES          99
                          ▼
              ◇ NUMBER OF MOTION VECTORS   910
                SUFFICIENT? ◇
       NO │                │ YES
          ▼                ▼
┌──────────────────┐     (END)
│ ADDITION TO NUMBER│ 911
│ OF MOTION VECTORS │
└──────────────────┘
```

ADDITION TO NUMBER OF MOTION VECTORS ──── 911

IS CHANGE IN SHIFT SUFFICIENTLY SMALL? ──── 99

NUMBER OF MOTION VECTORS SUFFICIENT? ──── 910

END

FIG. 10

22

$$d \cdot (1 - |u(x_1) - u(x_2)| / d)$$

**FIG. 13**

**FIG. 15**

```
┌─────────────────────────────────────────────────┐
│  MEASUREMENT AND STORAGE OF PIXEL VALUES OF IMAGE │──── 131
└─────────────────────────────────────────────────┘
                        │
                        ▼
┌─────────────────────────────────────────────────┐──── 132
│          SELECTION OF NUMBER OF MOTION VECTORS AND│
│    LOW-PASS FILTERING FOR TWO FIRST PIXEL LINES OR│
│     NEW PIXEL LINE OR FOR TWO FIRST PIXEL COLUMNS │ ◄── W
│                  OR NEW PIXEL COLUMN              │
└─────────────────────────────────────────────────┘
                        │
                        ▼
┌─────────────────────────────────────────────────┐
│   DETERMINATION OF MAXIMUM VALUE FOR PARAMETER α  │──── 133
└─────────────────────────────────────────────────┘
                        │
                        ▼
            ┌──────────────────────────┐
            │   FIXING OF MOTION VECTORS│──── 134
            └──────────────────────────┘
                        │                           135
                        ▼
┌─────────────────────────────────────────────────┐
│ DETERMINATION OF VALUES AND DERIVATIVES OF INTERSECTIONS OF│ ◄──┐
│      PIXEL LINES/COLUMNS AND MOTION VECTOR       │           │
└─────────────────────────────────────────────────┘           │
                        │                                      │
                        ▼                                      │
            ┌──────────────────────────┐                       │
            │    CALCULATION OF LAPLACE │──── 136               │
            └──────────────────────────┘                       │
                        │                                      │
                        ▼                                      │
        ┌──────────────────────────────────┐                  │
        │  CALCULATION OF ADDITIONAL CONSTRAINT│──── 137       │
        └──────────────────────────────────┘                  │
                        │                                      │
                        ▼                                      │
        ┌──────────────────────────────────┐                  │
        │    UPDATING OF MOTION VECTOR SHIFT │──── 138         │
        └──────────────────────────────────┘                  │
                        │                                      │
                        ▼                                      │
                     ◇◇◇◇◇◇                                    │
              IS CHANGE IN SHIFT      NO                       │
              SUFFICIENTLY SMALL? ─────────────────────────────┘
                     ◇◇◇◇◇◇
                       139
                        │
                       YES
                        │
                        ▼
                     ◇◇◇◇◇◇  1310
  ADDITION TO NUMBER OF    NO
  MOTION VECTORS  ◄──── NUMBER OF MOTION VECTORS
      1311               SUFFICIENT?
                     ◇◇◇◇◇◇
                        │
                       YES
                        │
                        ▼
                        Q
```

## FIG. 14a

Q

1312

YES

HAVE ALL PIXEL LINES
BEEN PROCESSED?

NO

1313

PROCEEDING TO NEXT PIXEL LINE PAIR → W

1314

HAVE ALL PIXEL
COLUMNS BEEN
PROCESSED?

YES → END

NO

1315

PROCEEDING TO NEXT PIXEL COLUMN PAIR → W

FIG. 14b